# EUROPEAN PATENT SPECIFICATION

(11) **EP 2 225 873 B1**
(45) Date of publication and mention of the grant of the patent: **10.07.2013**
(21) Application number: 08865520.4
(22) Date of filing: 24.10.2008
(51) Int. Cl.: H04N 5/782, H04N 7/16, H04N 21/433, H04N 21/45, H04N 21/472, H04N 21/4147, H04N 21/475, H04N 21/488

(54) **SYSTEM AND METHOD FOR SELECTING PROGRAMS TO RECORD**
SYSTEM UND VERFAHREN ZUR AUSWAHL VON AUFZUZEICHNENDEN PROGRAMMEN
SYSTÈME ET PROCÉDÉ DE SÉLECTION DE PROGRAMMES À ENREGISTRER

(30) Priority: 25.12.2007 CN 200710125506
(43) Date of publication of application: 08.09.2010
(73) Proprietor: Shenzhen TCL New Technology LTD, Guangdong 518067 (CN)
(72) Inventor: MODI, Khelan, Fishers Indiana 46038 (US); COOPER, Steven L., Whitestown Indiana 46075 (US)
(74) Representative: Chamberlain, Alan James
(86) International application number: PCT/US2008/081169
(87) International publication number: WO 2009/082540

(56) References cited:
- WO-A2-01/56269
- WO-A2-2005/039166
- KR-A- 20000 042 161
- US-A1- 2003 115 589
- US-A1- 2005 149 965
- US-A1- 2005 193 414
- US-A1- 2007 271 582

## Description

### FIELD OF THE INVENTION

The present invention relates generally to features of video or audio recording devices. In particular, exemplary embodiments of the present invention relate to a system and method to facilitate selecting television programs to record based upon a user's prior viewing habits.

### BACKGROUND OF THE INVENTION

This section is intended to introduce the reader to various aspects of art which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In a device capable of recording television, or any other type of program which will occur on a predictable basis, it is possible to determine times, sources and patterns of viewing and set up automatic recordings based on this information, which is often acquired through the use of an electronic program guide (EPG). EPGs provide users with additional metadata about television programs such as time, program title, channel number, genre, and content ratings.

Certain recording devices that use EPGs allow the user to press a key to set up a recording for the current program. If guide data for the current program is not available, the user is presented with a "record scheduling screen" with most, but not all, relevant data filled in. Other devices allow profiling based on guide data for programs. This profiling allows for all instances of any program having a particular title, on any channel at any time, to be recorded. Profiling may also extend to record programs that are determined to be of a similar nature.

However, some video or audio recording devices do not have an EPG. In these devices, the title of the program is typically determined by information provided within a broadcast signal, such as Program System Information Protocol (PSIP) data for digital-TV programs or Extended Data Services (XDS) data for analog-TV programs. If the title of a program is captured from this information, the title may be displayed to the user as part of a list of programs, even though the user's system does not support or include an EPG.

These recording devices do not determine patterns automatically but depend on the user to modify current recording preferences to set up a pattern. An improved system and method of identifying and recording programs that may be of interest to a user is desirable.

US 2005/0193414 discloses a system and method caching data employing probabilistic predictive techniques. US 2005/0149965 discloses selective media storage based on user profiles and preferences. US 2007/271582 provides an interactive television program guide system in which a user may inform a program guide of the user's interests. KR 2000 0042161 discloses a method of producing a watching program list. US2003/115589 discloses a system and method for automatically flagging a channel as a favourite channel based on the number of times a user has tuned it.

### BRIEF DESCRIPTION OF THE DRAWINGS

Advantages of the invention may become apparent upon reading the following detailed description and upon reference to the drawings in which:
FIG. 1 is a block diagram of an electronic device in accordance with an exemplary embodiment of the present invention; and
FIG. 2 is a process flow diagram showing a process in accordance with an exemplary embodiment of the present invention.

### DETAILED DESCRIPTION

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Exemplary embodiments of the present invention provide an approach to facilitate selecting television programs to record based upon a user's prior viewing habits. Additionally, exemplary embodiments of the present invention do not require user intervention (e.g., automatically recording television programs that have been added to a list of favorites). Information used for determining which television programs to record may be provided via a received broadcast signal itself using, for example, PSIP data, XDS data, or the like.

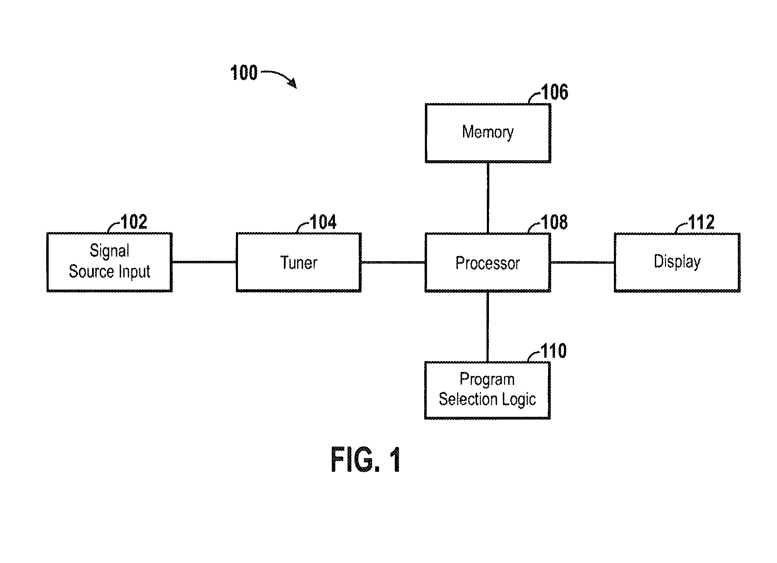

FIG. 1 is a block diagram of an electronic device in accordance with an exemplary embodiment of the present invention. The electronic device (e.g., a television, DVR, radio, set top box, or the like) is generally referred to by the reference number 100. The electronic device 100 comprises a signal source input (e.g., a cable inlet or an antenna) 102, a tuner 104, a memory 106, a processor 108, a program selection logic 110, and a display 112.

The signal source input 102 may comprise an RCA input, an s-video input, a composite video input, or the like. The signal source input 102 is adapted to receive a signal that comprises video or audio data, including the program title information. The title information is provided as part of a typical broadcast signal using, for example, PSIP data or XDS data. A tuner 104 is adapted to tune a particular audio or video stream from a broadcast signal received from the signal input source 102. The memory 106 may be adapted to hold machine-readable computer code that causes the processor 108 to perform an exemplary method in accordance with the present techniques. In one embodiment, the memory 106 may store computer code that blocks undesirable channels based on user established criteria (e.g., content ratings). Further, the memory 106 may store computer code that causes the processor to provide suggestions regarding alternative programming that is available. For example, upon turning to a program that is blocked, the electronic device 100 may display a screen indicating what channels are providing content that is unblocked during a certain time period. In another example, upon activation of the electronic device 100 (e.g., when a television is turned on), the electronic device 100 may display a screen indicating what programming is available and unblocked. Furthermore, the machine-readable computer code used by the processor 108 may include program selection logic 110 for determining which television programs are selected to be recorded. A display 112 may comprise a television, a monitor, or any other suitable display type.

Those of ordinary skill in the art will appreciate that the various functional blocks shown in FIG. 1 may comprise hardware elements (including circuitry), software elements (including computer code stored on a machine-readable medium), or a combination of both hardware and software elements.

An exemplary embodiment of the present invention is adapted to select television programs to record based upon a user's prior viewing habits. As the user turns on the electronic device 100, the program selection logic 110 begins collecting data about specific broadcast programs selected by the user (e.g., currently selected channel, program title, and program duration). If the user watches the same television program at the same time for more than a specified number of times, the program selection logic 110 may mark the television program as one of the user's "favorite" television programs and add it to a "ready to record" list. This list contains program information such as program title, start time, stop time, and channel number. The program selection logic 110 also collects the necessary information required to record the favorite television program. It should be noted that the parameters of the program selection logic 110 may be set based on product definition or user selection. For instance, the specified number of times a television program must be watched before it is marked as a user's favorite may be factory-set (and perhaps, non-adjustable) or left as an option for the user to select. This number may be any number greater than or equal to one.

If the electronic device 100 is in standby mode, when the recording is about to start, the electronic device 100 will be turned on and the selected television program will be recorded. If the user is watching another television program at the same time as the favorite television program, the electronic device 100 will prompt the user that the favorite television program is about to begin, allowing the user the opportunity to switch to the favorite television program if he so desires. In the case where the user flips between two television programs continuously, both of these television programs may be added to the favorite list and the user may select one or both television programs for recording if the electronic device 100 has the capability to record multiple television programs at the same time.

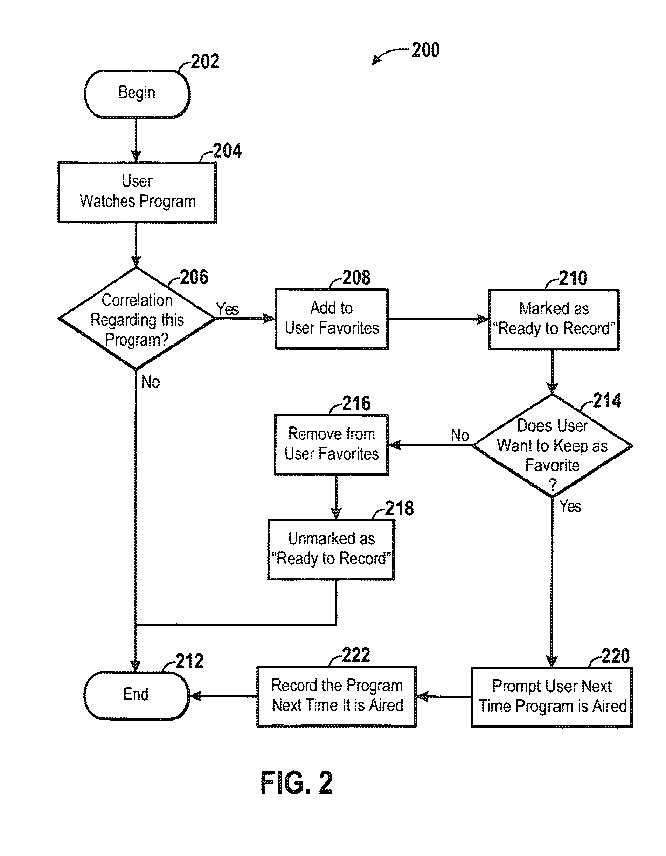

FIG. 2 is a process flow diagram showing a process in accordance with an exemplary embodiment of the present invention. The process is generally referred to by reference numeral 200.

At block 202, the process begins. At block 204, a user begins watching a television program. At block 206, a determination is made by the program selection logic 110 whether there is a correlation between the selected television program and the user's prior viewing habits. For instance, if the user has watched the selected television program on the same channel at the same time for more than a specified number of times, the selected television program may be added to a list of the user's favorite television programs and marked as "ready to record," as represented by blocks 208 and 210. In the event that no correlation exists between the selected television program and the user's prior viewing habits, the process ends at block 212 and waits to begin again once the user begins watching another television program.

Once the television program has been added to the user's list of favorite television programs and has been marked as "ready to record," the user must decide whether to keep the television program as a favorite, as represented in block 214. If the user decides he does not want to keep the television program as one of his favorites, the selected television program may be removed from the list of the user's favorite television programs and unmarked as "ready to record," as represented by blocks 216 and 218. However, if the user decides he wants to keep the television program as one of his favorites, the user may be prompted the next time the favorite television program is aired, as represented by block 220. Being prompted that the favorite television program is on will give the user an opportunity to switch over to the favorite television program in the event he is watching another television program at that time. In addition, the favorite television program will also be recorded the next time it is aired if the user has not indicated that the program should be removed as a favorite, as represented by block 222.

It should also be noted that in some exemplary embodiments, the user will have the option to remove individual instances when the favorite television program is marked "ready to record." For example, the user may want to record a certain favorite television program every Monday night but choose not to record next week's episode because he has already seen it. Moreover, in such embodiments, a single occurrence of a user's refusal to record a program will not cause the program to be removed from the user's list of favorite programs.

An additional benefit of the present invention is that it could potentially help increase the lifespan of the electronic recording device. Instead of scheduling recordings of all television programs the user watches, the electronic recording device could have a threshold for the number of viewing times needed to schedule future recordings of a given program. With this in mind, the present invention could keep track of data such as the type, size, and durability of the recording medium and the type of multimedia being recorded and determine a theoretical expected lifespan for the electronic recording device or the media. Thus, if a television program that has a high bitrate, such as high-definition material, were to be recorded daily on a media with a relatively low number of write-cycles, its lifespan would be less than one which is storing low-bitrate programs which occur infrequently.

With this data, the user could be presented with a theoretical expected lifespan based upon his recording practices. For example, if the user were to set the threshold to one, meaning that every instance of every program watched will be recorded in the future, then the lifespan of the device or media would be less than if the user chose a higher threshold. If this lifespan were to decrease below a certain level, perhaps chosen by the user, then the user might be warned, so that he could make adjustments to his recording methodology. Furthermore, for external or removable media, the present invention could store the serial number of the media in order to keep track of the potential lifespan for each external or removable media separately.

In addition, an exemplary embodiment of the present invention could provide the user with multiple thresholds for different types of programs to help accomplish increased lifespan. For example, the user could set different thresholds for high-definition vs. standard-definition television programs, or for daily vs. weekly television programs. Also, the user could be provided the option to ignore blocks of time, such as when the daily news is being broadcast, if the user does not wish to trigger automatic recording. Another option would be to ignore certain channels altogether, such as weather channels.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the scope of the invention as defined by the following appended claims.

## Claims

1. A recording electronic device (100), comprising:
a signal source input (102) that is adapted to receive a signal corresponding to a plurality of broadcast programs; and
a program selection logic (110) that is adapted to collect data about specific broadcast programs selected by a user from the signal corresponding to the plurality of broadcast programs, to add a one of the plurality of broadcast programs to a list of favorite programs if the user selects the one of the plurality of broadcast programs more than a specific number of times, to record the broadcast programs added to the list of favorite programs, and to compute an expected lifespan of the electronic device based on the number and frequency of the broadcast programs added to the list of favorite programs to be recorded; and
a processor (108) that executes said program selection logic.

2. The electronic device (100) of claim 1, wherein the electronic device (100) comprises a television.

3. The electronic device (100) of claim 1, wherein the data about specific broadcast programs is derived without using an electronic program guide.

4. The electronic device (100) of claim 1, wherein the data about specific broadcast programs comprises XDS data or PSIP data.

5. The electronic device (100) of claim 1, wherein the specific number of times is determined by the electronic device (100).

6. The electronic device (100) of claim 1, wherein the specific number of times is determined by user selection.

7. The electronic device (100) of claim 1, wherein the program selection logic (110) is further adapted to remove broadcast programs from the list of favorite programs when specified by the user.

8. The electronic device (100) of claim 1, wherein the program selection logic (110) is further adapted to prompt the user immediately before the broadcast programs added to the list of favorite programs are recorded.

9. A method (200) of identifying program content to record, the method comprising:
receiving a signal corresponding to a plurality of broadcast programs;
collecting data about specific broadcast programs selected by a user from the signal corresponding to the plurality of broadcast programs;
adding (208) a one of the plurality of broadcast programs to a list of favorite programs if the user selects the one of the plurality of broadcast programs more than a specific number of times;
recording (222) the broadcast programs added to the list of favorite programs; and
computing an expected lifespan of an electronic device based on the number and frequency of the broadcast programs added to the list of favorite programs to be recorded.

10. The method (200) of claim 9, wherein the data about specific broadcast programs is derived without using an electronic program guide.

11. The method (200) of claim 9, wherein the specific number of times is determined by an electronic device (100).

12. The method (200) of claim 9, further comprising prompting the user immediately before the broadcast programs added to the list of favorite programs are recorded.

## Patentansprüche

1. Aufzeichnungs-Elektronik-Vorrichtung (100), umfassend:
einen Signalquelleneingang (102), der dazu ausgelegt ist, dass er ein Signal empfängt, das einer Anzahl Sendeprogramme entspricht; und
eine Programmwahllogik (110), die dazu ausgelegt ist, dass sie Daten über bestimmte von einem Anwender gewählte Sendeprogramme aus dem Signal, das der Anzahl Sendeprogramme entspricht, sammelt, so dass eines der Anzahl Sendeprogramme zu einer Liste von Favoritenprogramme gefügt wird, wenn der Anwender das eine der Anzahl Sendeprogramme häufiger als eine bestimmte Anzahl Male auswählt, die zu der Liste der Favoritenprogramme gefügten Sendeprogramme aufgezeichnet werden, und eine erwartete Lebensdauer der Elektronikvorrichtung auf der Basis der Anzahl und Häufigkeit der zu der Liste der Favoritenprogramme gefügten Sendeprogramme berechnet wird; und
einen Prozessor (108), der die Programmwahllogik ausführt.

2. Elektronik-Vorrichtung (100) nach Anspruch 1, wobei die Elektronik-Vorrichtung (100) ein Fernsehgerät umfasst.

3. Elektronik-Vorrichtung (100) nach Anspruch 1, wobei die Daten über bestimmte Sendeprogramme ohne Verwendung eines elektronischen Programmführers erhalten werden.

4. Elektronik-Vorrichtung (100) nach Anspruch 1, wobei die Daten über bestimmte Sendeprogramme XDS-Daten oder PSIP-Daten umfassen.

5. Elektronik-Vorrichtung (100) nach Anspruch 1, wobei die bestimmte Anzahl Male von der Elektronik-Vorrichtung (100) bestimmt wird.

6. Elektronik-Vorrichtung (100) nach Anspruch 1, wobei die bestimmte Anzahl Male von der Anwenderwahl bestimmt wird.

7. Elektronik-Vorrichtung (100) nach Anspruch 1, wobei die Programmwahllogik (110) zudem dazu ausgelegt ist, dass sie Sendeprogramme aus der Liste der Favoritenprogramme entfernt, wenn dies vom Anwender angegeben wird.

8. Elektronik-Vorrichtung (100) nach Anspruch 1, wobei die Programmwahllogik (110) zudem dazu ausgelegt ist, dass sie den Anwender abfragt, unmittelbar bevor die zur Liste der Favoritenprogramme gefügten Sendeprogramme aufgezeichnet werden.

9. Verfahren (200) zum Identifizieren des aufzuzeichnenden Programminhalts, wobei das Verfahren umfasst:
Empfangen eines Signals, das der Anzahl Sendeprogramme entspricht;
Sammeln von Daten über bestimmte von einem Anwender gewählte Sendeprogramme, aus dem Signal, das der Anzahl Sendeprogramme entspricht;
Zufügen (208) eines der Anzahl Sendeprogramme zu einer Liste von Favoritenprogrammen, wenn der Anwender das eine der Anzahl Sendeprogramme häufiger als eine bestimmte Anzahl Male wählt;
Aufzeichnen (222) der zu einer Liste von Favoritenprogrammen gefügten Sendeprogramme; und
Berechnen einer erwarteten Lebensdauer einer Elektronik-Vorrichtung auf der Basis der Anzahl und Häufigkeit der Sendeprogramme, die zu der Liste der aufzuzeichnenden Favoritenprogramme gefügt wurden.

10. Verfahren (200) nach Anspruch 9, wobei die Daten über die bestimmten Sendeprogramme ohne Verwendung eines elektronischen Programmführers erhalten werden.

11. Verfahren (200) nach Anspruch 9, wobei die bestimmte Anzahl Male durch eine Elektronikvorrichtung (100) bestimmt wird.

12. Verfahren (200) nach Anspruch 9, zudem umfassend das Abfragen des Anwenders, unmittelbar bevor die zu der Liste der Favoritenprogramme gefügten Sendeprogramme aufgezeichnet werden.

## Revendications

1. Dispositif électronique d'enregistrement (100), comprenant :
une entrée de source de signal (102) qui est conçue pour recevoir un signal correspondant à une pluralité de programmes diffusés ; et
une logique de sélection de programme (110) qui est conçue pour collecter des données concernant des programmes diffusés spécifiques sélectionnés par un utilisateur à partir du signal correspondant à la pluralité de programmes diffusés, pour ajouter un programme de la pluralité de programmes diffusés à une liste de programmes favoris si l'utilisateur sélectionne l'un de la pluralité de programmes diffusés plus d'un nombre de fois spécifique, pour enregistrer les programmes diffusés ajoutés à la liste de programmes favoris, et pour calculer une durée de vie attendue du dispositif électronique sur la base du nombre et de la fréquence des programmes diffusés ajoutés à la liste de programmes favoris à enregistrer ; et
un processeur (108) qui exécute ladite logique de sélection de programme.

2. Dispositif électronique (100) selon la revendication 1, dans lequel le dispositif électronique (100) comprend un téléviseur.

3. Dispositif électronique (100) selon la revendication 1, dans lequel les données concernant des programmes diffusés spécifiques sont déduites sans utiliser un guide de programmes électronique.

4. Dispositif électronique (100) selon la revendication 1, dans lequel les données concernant des programmes diffusés spécifiques comprennent des données XDS ou des données PSIP.

5. Dispositif électronique (100) selon la revendication 1, dans lequel le nombre de fois spécifique est déterminé par le dispositif électronique (100).

6. Dispositif électronique (100) selon la revendication 1, dans lequel le nombre de fois spécifique est déterminé par une sélection d'utilisateur.

7. Dispositif électronique (100) selon la revendication 1, dans lequel la logique de sélection de programme (110) est en outre conçue pour retirer des programmes diffusés de la liste de programmes favoris lors d'une spécification par l'utilisateur.

8. Dispositif électronique (100) selon la revendication 1, dans lequel la logique de sélection de programme (110) est en outre conçue pour guider l'utilisateur immédiatement avant que les programmes diffusés ajoutés à la liste de programmes favoris soient enregistrés.

9. Procédé (200) d'identification d'un contenu de programme à enregistrer, le procédé comprenant :
la réception d'un signal correspondant à une pluralité de programmes diffusés ;
la collecte de données concernant des programmes diffusés spécifiques sélectionnés par un utilisateur à partir du signal correspondant à la pluralité de programmes diffusés ;
l'ajout (208) de l'un de la pluralité de programmes diffusés à une liste de programmes favoris si l'utilisateur sélectionne ledit un de la pluralité de programmes diffusés plus d'un nombre de fois spécifique ;
l'enregistrement (222) des programmes diffusés ajoutés à la liste de programmes favoris ; et
le calcul d'une durée de vie attendue d'un dispositif électronique sur la base du nombre et de la fréquence des programmes diffusés ajoutés à la liste de programmes favoris à enregistrer.

10. Procédé (200) selon la revendication 9, dans lequel les données concernant des programmes diffusés spécifiques sont déduites sans utiliser un guide de programmes électronique.

11. Procédé (200) selon la revendication 9, dans lequel le nombre de fois spécifique est déterminé par un dispositif électronique (100).

12. Procédé (200) selon la revendication 9, comprenant en outre le guidage de l'utilisateur immédiatement avant que les programmes diffusés ajoutés à la liste de programmes favoris soient enregistrés.
